# EUROPÄISCHE PATENTSCHRIFT

(11) **EP 0 468 164 B1**
(45) Veröffentlichungstag und Bekanntmachung des Hinweises auf die Patenterteilung: **20.07.1994**
(21) Anmeldenummer: 91108681.7
(22) Anmeldetag: 28.05.1991
(51) Int. Cl.: B29C 45/14

(54) **Verfahren und Vorrichtung zum Umspritzen von Metallteilen mit Kunststoff**
Method and apparatus for coating metal parts with plastic material
Procédé et dispositif pour surmouler en matière plastique des parties métalliques

(30) Priorität: 27.07.1990 DE 4023967
(43) Veröffentlichungstag der Anmeldung: 29.01.1992
(73) Patentinhaber: WEISSER SPULENKÖRPER GmbH & Co. KG, D-73450 Neresheim (DE)
(72) Erfinder: Kaufmann, Norbert, W-7087 Essingen (DE)
(74) Vertreter: Goetz, Rupert, Dipl.-Ing.

(56) Entgegenhaltungen:
- CH-A- 429 133
- DE-A- 1 529 969
- PATENT ABSTRACTS OF JAPAN, Band 14, Nr. 311 (M-994)[4254], 4. Juli 1990;& JP-A-2 103 111 (FUJI ELECTRIC CO., LTD) 16-04-1990

## Beschreibung

Die Erfindung betrifft ein Verfahren und eine Vorrichtung zum Umspritzen von Metallteilen mit Kunststoff.

Aus der DE-A-1529969 ist eine solche Vorrichtung bekannt, bei der mehrere in einzelne Metallteile unterteilbare Stränge in einen Formhohlraum einer Spritzform vorgeschoben werden, je ein vorderer Endabschnitt der Stränge im Formhohlraum mit Kunststoff umspritzt wird, und die Stränge außerhalb des Formhohlraumes durchtrennt werden. Dabei werden mehrere Stränge von je einer Spule abgewickelt, durch je einen Einführungsstutzen hindurch in eine gemeinsame Vorschubeinrichtung und von dieser weiter durch je einen Führungskanal in eine Spritzform eingeführt. Zur Vorschubeinrichtung gehören eine ortsfeste Tragplatte, die den Spulen zugewandt ist und die Einführungsstutzen trägt, eine Aufnahmeplatte, die in einem Abstand parallel zur Tragplatte angeordnet und durch die Führungskanäle mit der Spritzform verbunden ist, sowie eine Spannplatte, die zwischen Tragplatte und Aufnahmeplatte angeordnet und mittels einer Kolbenzylindereinheit um eine einstellbare Strecke von der Tragplatte weg in Richtung zur Aufnahmeplatte verschiebbar ist. In der Spannplatte sind Klemmvorrichtungen angeordnet, die mittels einer gemeinsamen Kolbenzylindereinheit betätigbar sind, um sämtliche Stränge gleichzeitig zu klemmen. Die Spritzform ist auf ihrer der Vorschubeinrichtung zugewandten Seite durch eine ortsfeste Führungsplatte begrenzt, die für jeden Strang ein Loch aufweist. An der Führungsplatte außen anliegend ist eine Schneidplatte quer zu den Strängen verschiebbar geführt. An dieser Schneidplatte enden die Führungskanäle.

Zu Beginn jedes Arbeitszyklus dieser bekannten Vorrichtung nimmt die Spannplatte eine Ruhestellung ein, in der sie an der Tragplatte anliegt. Dabei werden sämtliche Stränge in der Spannplatte festgeklemmt. Anschließend wird diese so weit vorgeschoben, bis von jedem Strang ein vorderer Endabschnitt vorbestimmter Länge durch die Schneidplatte und die Führungskanäle hindurch in den Formhohlraum hineinragt. Anschließend wird der Formhohlraum mit Kunststoff gefüllt, wobei die vorderen Endabschnitte der Stränge umspritzt und dadurch in ihrer endgültigen Stellung in bezug auf den entstehenden Kunststoffkörper, beispielsweise Spulenkörper, festgelegt werden. Sodann werden die Stränge durch Verschieben der Schneidplatte gegenüber der Führungsplatte abgeschnitten. An den dabei entstehenden Schnittflächen der aus dem Kunststoff herausragenden Metallteile bleiben scharfkantig begrenzte Schnittflächen zurück, die einen späteren Fügevorgang, beispielsweise das Aufstecken auf eine Printplatte, erschweren können.

Um solche Montagevorgänge zu erleichtern, ist es auch bekannt, Kunststoffkörper, insbes. Spulenkörper, die mit Aussparungen für Metallteile gespritzt worden sind, nachträglich mit Metallteilen zu bestücken, die an ihren Enden angeschrägt sind. Zum Einbringen solcher Metallteile in Kunststoffkörper ist eine Vorrichtung bekannt (Prospekt "AUTOPIN" der Autosplice GmbH, Nürnberg) der ein Strang mit vorgeformten Kerben als Trennstellen zugeführt wird. Die Vorrichtung weist eine in Längsrichtung des Strangs hin- und herbewegliche Klinke auf, die jeweils am Ende eines Rückwärtshubes in eine Kerbe eingreift und beim nächsten Vorwärtshub den Strang um eine Strecke mitnimmt, die mit dem Abstand zwischen je zwei Kerben übereinstimmt. Um zu verhindern, daß der Strang sich beim nächsten Rückhub dieser Klinke ebenfalls zurückbewegt, ist eine zweite Klinke vorgesehen, die den Strang während des Rückhubes der ersten festhält. Mit dieser bekannten Vorrichtung können in einem Kunststoffkörper eng nebeneinander angeordnete Ausnehmungen, in die je ein Metallteil eingesetzt werden soll, nur nacheinander beschickt werden, was beim Bestücken von Kunststoffkörpern mit zahlreichen Metallteilen einen erheblichen Zeitaufwand erfordert.

Entsprechendes gilt auch für ein aus der CH-C-429133 bekanntes Spritzwerkzeug, bei dem ein in einem Werkzeugteil geführter Auswerfer eine zentrale Bohrung aufweist, durch die hindurch bereits getrennte und an ihren Enden abgeschrägte Stifte hintereinander in einen Formhohlraum einführbar sind. Die Stifte werden in einem Behälter bereitgehalten und fallen von dort nacheinander in einen radialen Kanal, der in die zentrale Bohrung mündet. In der zentralen Bohrung werden die Stifte im Takt der Spritzvorgänge mittels eines Stößels vorgeschoben, der von einer fluidbetätigten Kolbenzylindereinheit angetrieben wird. All diese Bauteile haben einen Platzbedarf, der es ausschließt, mehrere solche Stifte gleichzeitig in eng benachbarte Stellungen im Formhohlraum zu bringen.

Der Erfindung liegt deshalb die Aufgabe zugrunde, die Herstellung von Kunststoffkörpern mit mehreren eng nebeneinander angeordneten umspritzten Metallteilen, deren freie Enden angeschrägt sind, zu ermöglichen.

Die Aufgabe ist erfindungsgemäß, soweit sie ein Verfahren betrifft, mit den Merkmalen des Anspruchs 1 gelöst.

Stränge mit vorgeformten Trennstellen haben unvermeidliche Abstandstoleranzen zwischen den Trennstellen. Dies gilt für jeden einzelnen Strang und nicht minder für mehrere Stränge, die gleichzeitig in eine Spritzform hineingeführt werden. Solche Abstandstoleranzen wären dann unschädlich, wenn ausreichend Platz zur Verfügung stünde, um jedem einzelnen Strang eine in dessen Längsrichtung hin- und herbewegliche Vorschubklinke zuzuordnen, die bei jedem Rückhub von der Spritzform weg in der bekannnten Weise in eine vorgeformte Trennstelle des zugehörigen Strangs einrastet und den Strang dann um eine vorbestimmte Strecke vorwärtsschiebt. Wenn aber, wie bei Spritzformen für Spulenkörper u.dgl. üblich, zahlreiche Metallteile auf engem Raum nebeneinander angeordnet werden müssen, lassen sich nur einfache Klemmvorrichtungen unterbringen, die sämtliche Stränge ohne Rücksicht auf die Lage von deren vorgeformten Trennstellen festklemmen und jeweils um eine bestimmte Strecke vorwärtsschieben. Bei Verwendung solcher einfachen Klemmvorrichtungen würden sich die Abstandstoleranzen zwischen den vorgeformten Trennstellen der einzelnen Stränge schon nach wenigen Arbeitszyklen derart unterschiedlich summieren, daß die vorgeformten Trennstellen mancher Stränge vor und anderer Stränge hinter einer Trennvorrichtung zu liegen kämen mit der Folge, daß nicht mehr alle Stränge nach dem Umspritzen ihrer vorderen Endabschnitte an den vorgeformten Trennstellen durchtrennt werden könnten.

Durch die erfindungsgemäßen Maßnahmen wird vermieden, daß Abstandstoleranzen zwischen den Trennstellen sich bei den einzelnen Strängen unterschiedlich summieren. Die Vorschubbewegung jedes einzelnen Strangs wird erst dadurch beendet, daß dessen vorderes Ende gegen den zugehörigen Anschlag im Formhohlraum stößt. Um dies für alle Stränge zu gewährleisten, wird die Vorschubstrecke etwas größer als der größte vorkommende Abstand zwischen zwei aufeinanderfolgenden Trennstellen gewählt. Der überschüssige Vorschub hat zur Folge, daß die einzelnen Stränge sich mehr oder weniger stark schlangenlinienförmig biegen, wobei jeder einzelne von ihnen zwar nur lose geführt wird, dies aber doch in ausreichendem Maß, um an den vorgeformten Trennstellen nicht so stark knicken zu können, daß er brechen würde.

Vorteilhafte Weiterbildungen des erfindungsgemäßen Verfahrens sind Gegenstand der Ansprüche 2 und 3.

Soweit die Erfindung eine Vorrichtung zum Durchführen des beschriebenen Verfahrens betrifft, ist die beschriebene Aufgabe mit den Merkmalen des Anspruchs 4 gelöst.

Vorteilhafte Weiterbildungen der erfindungsgemäßen Vorrichtung sind Gegenstand der Ansprüche 5 bis 10.

Ein Ausführungsbeispiel der Erfindung wird im folgenden anhand schematischer Zeichnungen mit weiteren Einzelheiten erläutert. Es zeigen:
- Fig. 1 bis 3: Seitenansichten einer erfindungsgemäßen Vorrichtung in drei aufeinanderfolgenden Betriebszuständen,
- Fig. 4: die zu Fig. 3 gehörige Draufsicht,
- Fig. 5: den waagerechten Teilschnitt V-V in Fig. 3,
- Fig. 6: die Fortsetzung von Fig. 5 nach rechts in etwas größerem Maßstab,
- Fig. 7: den Schnitt VII-VII in Fig. 5 und
- Fig. 8: den waagerechten Teilschnitt VIII-VIII in Fig. 1.

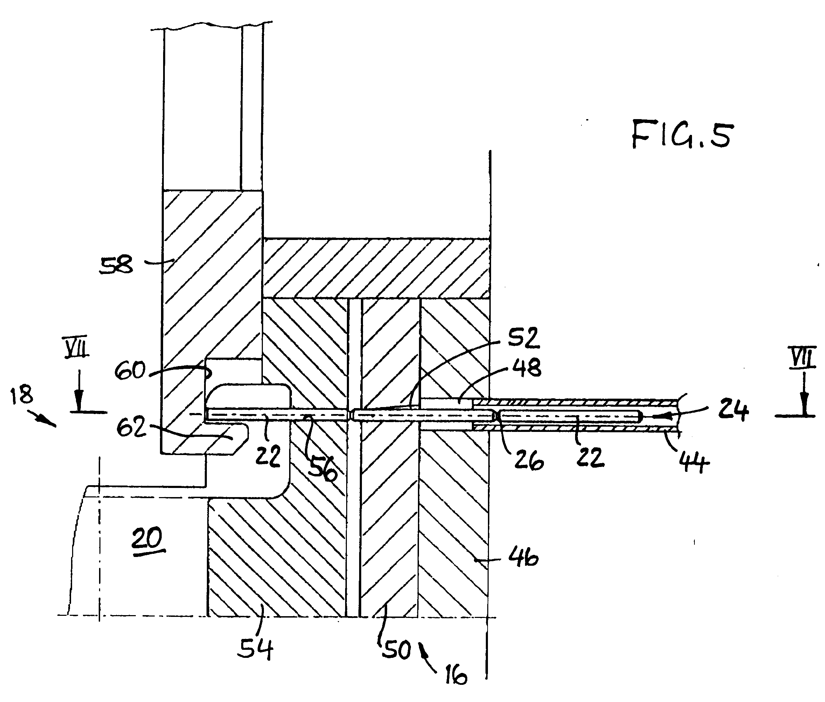

Die dargestellte Vorrichtung hat ein Strangmagazin 12 sowie mehrere, auf einer gemeinsamen Grundplatte 10 montierte Baugruppen, nämlich eine Vorschubeinrichtung 14, eine Trenneinrichtung 16 und eine Spritzform 18. Die Spritzform 18 hat mehrere Formhohlräume 20 zum Spritzen je eines Spulenkörpers aus Kunststoff. Von den Formhohlräumen 20 ist einer in Fig. 5, 7 und 8 teilweise dargestellt. In jeden der Formhohlräume 20 sollen bei jedem Arbeitszyklus der Vorrichtung mehrere stiftförmige Metallteile 22 eingesetzt werden, um anschließend derart mit Kunststoff umspritzt zu werden, daß die beiden Enden jedes Metallteils 22 aus einem leistenförmigen Ansatz jedes Spulenkörpers herausragen.

Die Metallteile 22 werden in Form von Strängen 24 im Strangmagazin 12 bereitgehalten. An jedem der Stränge 24 sind in bekannter Weise vorgeformte, beispielsweise geprägte oder gestanzte, Trennstellen 26 ausgebildet, die in Abständen a angeordnet sind. Die Abstände a der Trennstellen 26 in allen Strängen 24 sind zwar im Rahmen des fertigungstechnisch Möglichen gleichgroß, haben aber unvermeidliche Toleranzen, die bei üblichen Abständen a von beispielsweise 20 mm die Größenordnung von etwa 0,1 bis 0,2 mm erreichen können. Diese Abstandstoleranzen sollen mit den im folgenden beschriebenen Maßnahmen unschädlich gemacht werden, damit die dargestellte Vorrichtung über lange Zeitspannen mit zahlreichen Strängen 24 störungsfrei arbeiten kann. In der Praxis werden beispielsweise zum gleichzeitigen Herstellen von vier Spulenkörpern, die mit je sechzehn Metallteilen 22 bestückt werden, insgesamt vierundsechzig Stränge 24 benötigt.

Jeder der Stränge 24 läuft von einer im Strangmagazin 12 gelagerten Spule 28 ab und wird nacheinander durch eine Tragplatte 30, eine Spannplatte 32 und eine Aufnahmeplatte 34 der Vorschubeinrichtung 14 hindurchgeführt. Die Aufnahmeplatte 34 ist an der Grundplatte 10 befestigt. Die Tragplatte 30 ist durch vier zu den Strängen 24 parallele, waagerechte Holme 36 in einstellbarem Abstand mit der Aufnahmeplatte 34 fest verbunden. Die Spannplatte 32 ist zwischen der Tragplatte 30 und der Aufnahmeplatte 34 auf den Holmen 36 verschiebbar geführt und mit einer an der Tragplatte 30 abgestützten Antriebseinheit 38 über ein Umlenkgetriebe 40 verbunden. In der Spannplatte 32 sind Klemmeinrichtungen angeordnet, die von einer weiteren Antriebseinheit 42 derart betätigbar sind, daß bei jedem Vorwärtshub der Spannplatte 32, in Richtung zur Spritzform 18 hin, sämtliche Stränge 24 in der Spannplatte 32 festgeklemmt, bei deren Rückhub aber freigegeben werden. Die Antriebseinheiten 38 und 42 sind als pneumatische oder hydraulische Kolbenzylindereinheiten dargestellt.

Die gesamte Vorschubeinrichtung 14 ist aus der genannten DE-A-1529969 sowie aus der Praxis bekannt und braucht deshalb nicht im einzelnen dargestellt zu werden. In der Tragplatte 30 können in bekannter Weise pneumatisch betätigbare Klemmelemente angeordnet sein, die derart gesteuert sind, daß jeweils beim Rückhub der Spannplatte 32 sämtliche Stränge 24 in der Tragplatte 30 festgeklemmt werden. Dies ist jedoch bei der erfindungsgemäßen Betriebsweise nicht erforderlich, bei der die Stränge 24 schon durch ihre Fixierung in der Spritzform 18 gehindert werden, sich zusammen mit der Spannplatte 32 rückwärts zu bewegen.

Von der ortsfesten Aufnahmeplatte 34 der Vorschubeinrichtung 14 erstrecken sich Führungskanäle 44 zu einer ebenfalls ortsfesten, gemeinsamen Aufnahmeplatte 46 der Trenneinrichtung 16 und der Spritzform 18. Im dargestellten Beispiel sind die Führungskanäle 44 von einzelnen Röhrchen gebildet, deren Enden in je einer Bohrung der Aufnahmeplatten 34 und 46 aufgenommen sind. In jedem der Führungskanäle 44 ist einer der Stränge 24 mit radialem Spiel geführt. Wenn die Stränge 24 beispielsweise aus Runddraht mit 0,8 mm Durchmesser bestehen, haben die Führungskanäle 44 je einen lichten Durchmesser von 1,0 mm. Die Länge der Führungskanäle 44 beträgt beispielsweise 800 mm.

Jeder der Stränge 24 erstreckt sich im Anschluß an den zugehörigen Führungskanal 44 mit erheblich größerem radialen Spiel durch einen Durchlaß 48 in der Aufnahmeplatte 46. An der von den Führungskanälen 44 abgewandten Seite der Aufnahmeplatte 46 liegt eine Trennplatte 50 an, die quer zu den Strängen 24 um eine kleine Strecke in der Größenordnung von etwa 0,2 bis 1,0 mm hin- und herbewegbar ist. Die Bewegungen der Trennplatte 50 sind vorzugsweise, wie bei Schiebern von Spritzwerkzeugen üblich, durch einen Winkel- oder Keiltrieb von Öffnungs- und Schließbewegungen der Spritzform 18 abgeleitet.

Die Trennplatte 50 hat für jeden der Stränge 24 einen Durchlaß 52, der bei geschlossener Spritzform 18 die Stellung gemäß Fig. 5 einnimmt und an seinem vorderen, in Fig. 5 linken Ende den zugehörigen Strang nahezu spielfrei umschließt, sich aber zu seinem hinteren Ende hin derart erweitert, daß der in diesem Durchlaß steckende, ein Metallteil 22 bildende Abschnitt des zugehörigen Strangs 24 nicht verbogen wird, wenn die Trennplatte 50 beim Öffnen der Spritzform 18 so verschoben wird, daß die Stränge 24 an ihrer jeweils vordersten Trennstelle 26 abgebrochen werden.

Auf die Trennplatte 50 folgt eine ortsfeste Führungsplatte 54, die Bestandteil der Trenneinrichtung 16 und zugleich der Spritzform 18 ist und Durchlässe 56 aufweist, in denen je einer der Stränge 24 nahezu spielfrei geführt ist. Die Führungsplatte 54 begrenzt den Formhohlraum 20. Zwischen der Trennplatte 50 und der Führungsplatte 54 ist ein Spalt von der Breite b freigelassen, die bei dem dargestellten Beispiel mit Abständen a in der Größenordnung von 20 mm etwa 1 bis 2 mm beträgt.

In die Spritzform 18 können Schieber 58 einfahrbar sein, von denen einer in Fig. 5 dargestellt ist. Die Bewegungen der Schieber 58 können ebenfalls über Winkel- oder Keiltriebe von den Öffnungs- und Schließbewegungen der Spritzform 18 abgeleitet sein, jedoch im Gegensatz zu den Bewegungen üblicher Schieber derart, daß die Schieber 58 in der Spritzform 18 gegen Ende von deren Öffnungsbewegung einfahren und zu Beginn der Schließbewegung wieder ausfahren.

An jedem Schieber 58 sind ein Anschlag 60 sowie ein Mitnehmer 62 für eine zugehörige Gruppe von beispielsweise sechs Strängen 24 ausgebildet. Der Anschlag 60 begrenzt die Vorwärtsbewegung des jeweils vordersten Metallteils 22 der zugehörigen Stränge 24. Der Mitnehmer 62 läßt am jeweils vordersten Metallteil 22 der zugehörigen Stränge 24 einen hakenförmig gebogenen Abschnitt 64 entstehen, wenn der Schieber 58, in Fig. 5 nach oben, aus dem Formhohlraum 20 herausbewegt wird.

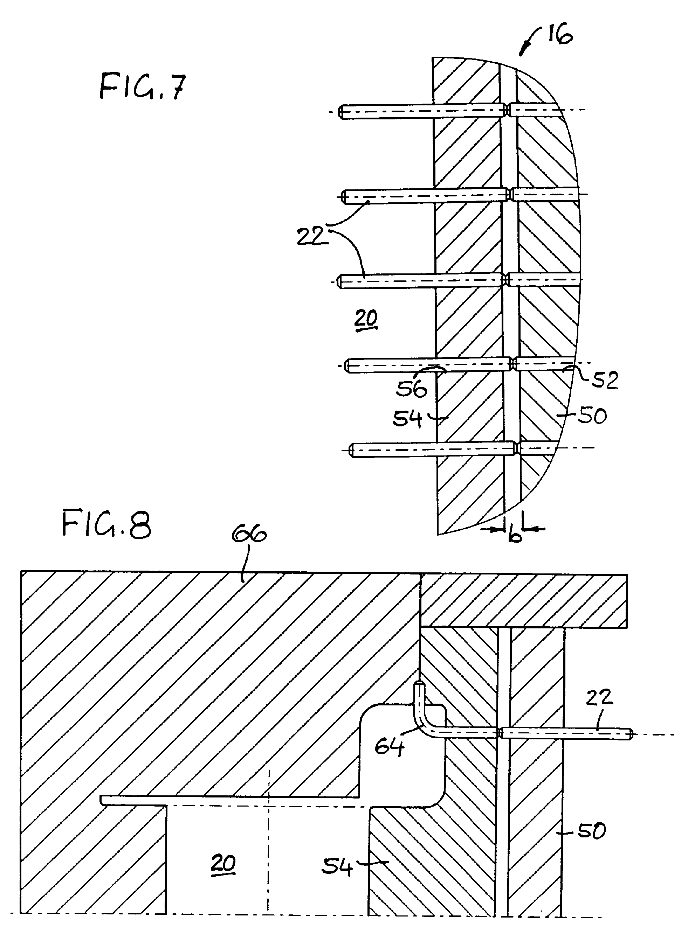

Zur Spritzform 18 gehört ein in Längsrichtung der Stränge 24 hin- und herbewegbares weiteres Formteil 66, das in Fig. 8 teilweise dargestellt ist. Die Führungsplatte 54 und das weitere Formteil 66 sind so ausgebildet, daß sie bei geschlossener Spritzform 18 die Enden der hakenförmig gebogenen Abschnitte 64 der jeweils vordersten Metallteile 22 zwischen sich fest einklemmen.

Wenn es nicht erforderlich ist, die Metallteile 22 in der aus Fig. 8 ersichtlichen Weise umzubiegen, können die Schieber 58 weggelassen und die Anschläge 60 unmittelbar an dem Formteil 66 angeordnet sein. In diesem Fall muß die Spritzform 18 geschlossen werden, ehe die Stränge 24 mit ihren vorderen Enden gegen die Anschläge 60 geschoben werden. Dies kann mit solcher Kraft geschehen, daß die vorderen Enden der Stränge 24 gestaucht oder gespreizt oder leicht verbogen werden. Zu diesem Zweck können die Anschläge 60 beispielsweise ein scharfkantiges Keilprofil aufweisen.

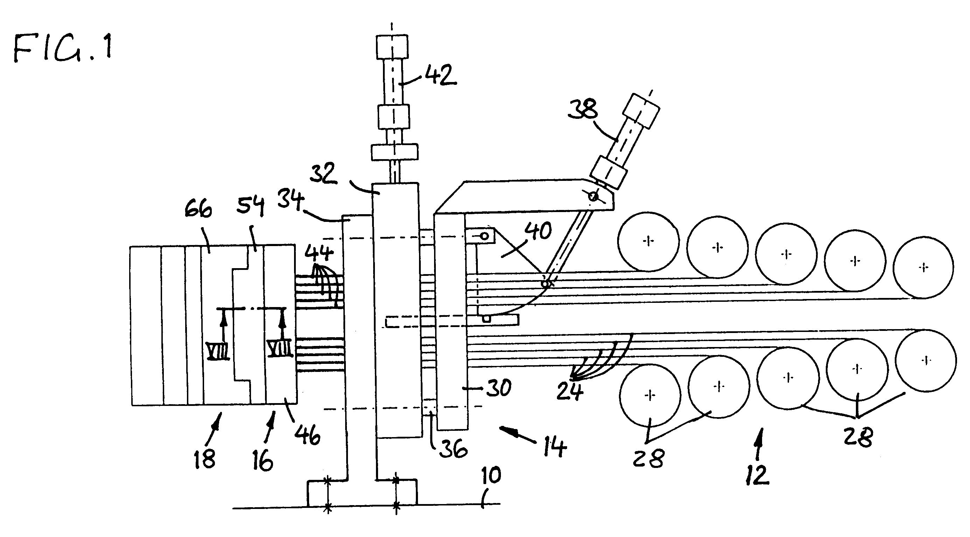

In Fig. 1 und 8 ist die mit Schiebern 58 gemäß Fig. 8 ausgerüstete Vorrichtung in einem Betriebszustand unmittelbar vor einem Spritzvorgang abgebildet. Der zuvor hakenförmig umgebogene Abschnitt 64 des vordersten Metallteils 22 sämtlicher Stränge 24 ist zwischen der Führungsplatte 54 und dem weiteren Formteil 66 der geschlossenen Spritzform 18 eingeklemmt. Die Spannplatte 32 der Vorschubeinrichtung 14 liegt an der zugehörigen Aufnahmeplatte 34 an, nimmt also ihre vordere Endstellung ein. Die Antriebseinheit 42 hält die Stränge 24 in der Spannplatte 32 festgeklemmt.

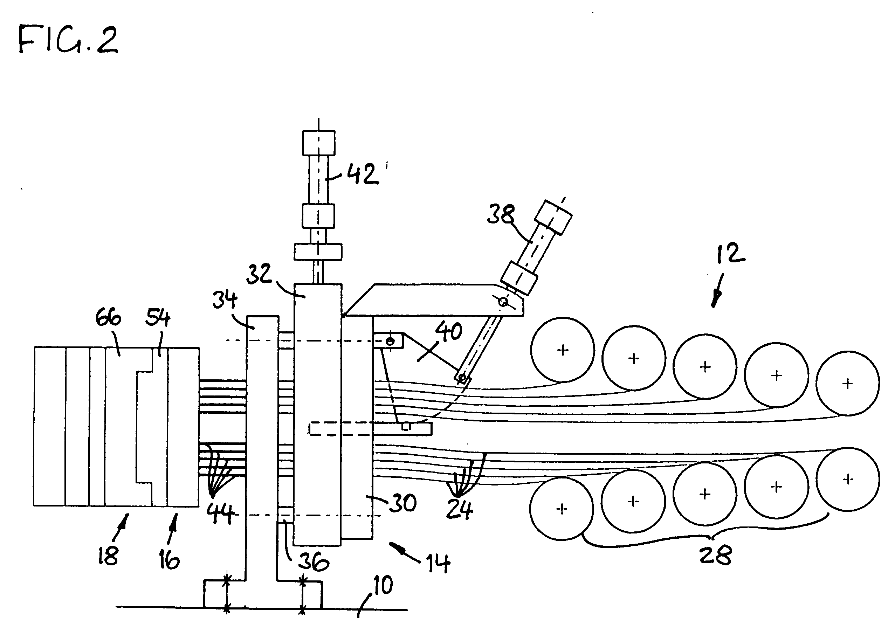

In Fig. 2 ist ein Betriebszustand nach einem Spritzvorgang und Erkalten der gespritzten Spulenkörper dargestellt. Die Spannplatte 32 der Vorschubeinrichtung 14 liegt an der zugehörigen Tragplatte 30 an, nimmt also ihre hintere Endstellung ein. Während der Bewegung der Spannplatte 32 in diese Stellung hat die Antriebseinheit 42 die zugehörigen Klemmeinrichtungen geöffnet, während die erwähnten Klemmelemente in der Tragplatte 30, falls solche Klemmelemente vorhanden sind, die Stränge 24 festgehalten haben. Ehe die Spannplatte 32 sich wieder nach vorne bewegt, wird die Klemmung wieder umgekehrt, so daß die Stränge 24 erneut in der Spannplatte 32 festgeklemmt werden, in der Tragplatte 30 jedoch wieder verschiebbar sind.

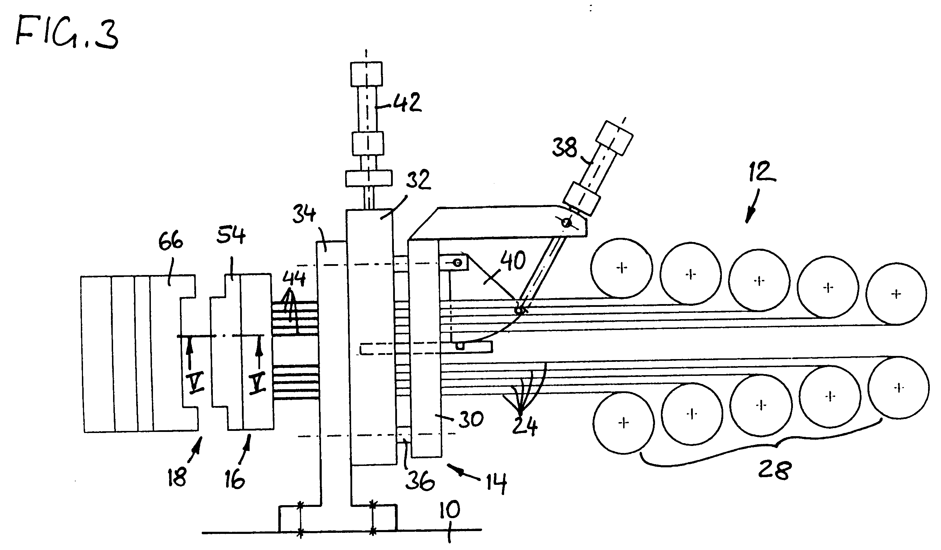

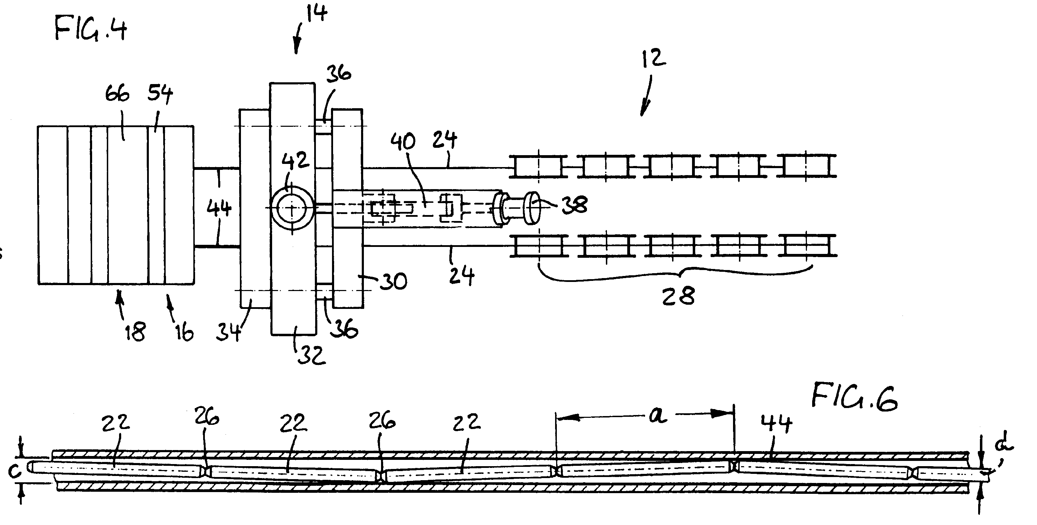

In dem folgenden Betriebszustand, der in Fig. 3 bis 7 dargestellt ist, hat sich die Spritzform 18 geöffnet und die fertigen Spulenkörper sind ausgeworfen worden und dann hat jeder der Schieber 58 seine in bezug auf die Spritzform 18 innere Stellung eingenommen.

Anschließend wird die Spannplatte 32 von der zugehörigen Antriebseinheit 38 um eine Strecke vorwärtsbewegt, die etwas größer ist als die Abstände a. Infolgedessen werden sämtliche Stränge 24 um die gleiche Strecke vorwärtsbewegt. Ehe diese Vorwärtsbewegung beendet ist, stößt das vordere Ende jedes Strangs 24 gemäß Fig. 5 gegen den zugehörigen Anschlag 60.

Die weitere Vorwärtsbewegung der Spannplatte 32 bis zum Anliegen an der Aufnahmeplatte 34 hat zur Folge, daß die Stränge 24 in ihrer Längsrichtung belastet werden und sich infolgedessen gemäß Fig. 6 in den Führungskanälen 44 schlangenlinienförmig verbiegen. Dabei kann an einzelnen Trennstellen 26 die Elastizitätsgrenze überschritten werden. Die Metallteile 22 selbst werden jedoch, wenn überhaupt, nur elastisch verformt.

Durch die Elastizität der Stränge 24 ist gewährleistet, daß jeder von ihnen mit seinem vorderen Ende solange am zugehörigen Anschlag 60 anliegend gehalten wird, bis das vorderste Metallteil 22 in der Spritzform 18 fixiert ist. Die Fixierung geschieht gemäß Fig. 5 schon durch den Beginn der Auswärtsbewegung des Schiebers 58, also schon dadurch, daß die vordersten Metallteile 22 mit Querkräften belastet werden. Wenn die Anschläge 60 jedoch am Formteil 66 ausgebildet sind, werden die vordersten Metallteile 22 normalerweise erst dadurch fixiert, daß sie mit Kunststoff umspritzt werden.

In jedem Fall kommt die das vorderste Metallteil 22 begrenzende Trennstelle 26 sämtlicher Stränge 24 in dem Spalt von der Breite b zu liegen. Dabei können gemäß Fig. 7 einzelne Trennstellen 26 nahe der Trennplatte 50, andere nahe der Führungsplatte 54 und weitere Trennstellen 26 in der Mitte zwischen diesen beiden Platten liegen. Infolgedessen ist gewährleistet, daß sämtliche Stränge 24 an ihrer vordersten Trennstelle 22 abbrechen, sobald die Trennplatte 50 in eine Stellung verschoben wird, in der zusammengehörige Durchlässe 52 und 56 nicht mehr miteinander fluchten. Diese Verschiebung der Trennplatte 54 geschieht zu Beginn des Öffnens der Spritzform 18, damit die gespritzen Spulenkörper samt eingebetteten Metallteilen 22 dann aus der Spritzform 18 ausgestoßen werden können.

## Patentansprüche

1. Verfahren zum Umspritzen von Metallteilen mit Kunststoff, bei dem
- mehrere in einzelne Metallteile (22) unterteilbare Stränge (24) mit vorgeformten Trennstellen (26) zwischen den Metallteilen (22) in einen Formhohlraum (20) einer Spritzform (18) vorgeschoben werden,
- je ein vorderer Endabschnitt der Stränge (24) im Formhohlraum (20) mit Kunststoff umspritzt wird, wobei
- die Stränge (24) in einem Abschnitt vor dem Formhohlraum (20) nur lose geführt werden,
- die Stränge (24) bis zu einem Anschlag (60) im Formhohlraum (20) vorgeschoben und mit einer Schubkraft belastet werden, durch die sie zur Bildung einer Längenreserve in dem Abschnitt vor dem Formhohlraum (20) schlangenlinienförmig gebogen werden,
- das vorderste Metallteil (22) jedes Strangs (24) in der Spritzform (18) fixiert wird,
- die Schubkraft nach dem Fixieren des vordersten Metallteils (22) aufgehoben und die Stränge (24) zum Zurückwandern ihrer Längenreserve freigegeben werden, und
- die Stränge (24) außerhalb des Formhohlraums (20) erneut eingespannt und erst dann an ihrer vordersten Trennstelle (26) durchtrennt werden.

2. Verfahren nach Anspruch 1,
dadurch **gekennzeichnet**, daß die vordersten Metallteile (22) vor dem Aufheben der die Stränge (24) belastenden Schubkraft umspritzt werden.

3. Verfahren nach Anspruch 1 oder 2,
dadurch **gekennzeichnet**, daß die Stränge (24) zum Durchtrennen an der vordersten Trennstelle (26) abgebrochen werden.

4. Vorrichtung zum Umspritzen von Metallteilen mit Kunststoff zur Durchführung des Verfahrens nach Anspruch 1 mit
- einem Strangmagazin (12) zum Bereithalten mehrerer Stränge (24),
- einer Vorschubeinrichtung (14) zum gleichzeitigen Vorschieben der Stränge (24) um eine bestimmte Vorschubstrecke,
- Führungskanälen (44), in denen jeder einzelne Strang (24) in Richtung von der Vorschubeinrichtung (14) weg geführt ist,
- einer Trenneinrichtung (16) mit einer Aufnahmeplatte (46), die sich an die Führungskanäle (44) anschließt, einer dazu parallelen Trennplatte (50), die quer zu den Strängen (24) verstellbar ist, und einer Führungsplatte (54), sowie
- einer Spritzform (18) mit mindestens einem Formhohlraum (20), der sich an die Trenneinrichtung (16) anschließt, dadurch **gekennzeichnet**, daß
- die Vorschubeinrichtung (14) auf eine Vorschubstrecke einstellbar ist, die größer als der Abstand (a) zwischen zwei aufeinanderfolgenden Trennstellen (26) ist,
- die Führungskanäle (44) ein lichtes Querschnittsmaß haben, das groß genug ist, um den Strängen (24) bei Beanspruchung durch eine Schubkraft eine schlangenlinienförmige Verbiegung zu ermöglichen,
- zwischen Trennplatte (50) und Führungsplatte (54) der Trenneinrichtung (16) ein Spalt freigelassen ist, dessen Breite (b) mindestens ebenso groß wie die größte vorkommende Abstandstoleranz zwischen aufeinanderfolgenden Trennstellen (26) ist, und
- im Formhohlraum (20) mindestens zeitweise ein Anschlag (60) für die vorderen Enden der Stränge (24) angeordnet ist.

5. Vorrichtung nach Anspruch 4,
dadurch **gekennzeichnet**, daß das lichte Querschnittsmaß (c) der Führungskanäle (44) um 10 bis 50% größer ist als das entsprechende Querschnittsmaß (d) des zugehörigen Strangs (24).

6. Vorrichtung nach Anspruch 5,
dadurch **gekennzeichnet**, daß das lichte Querschnittsmaß (c) der Führungskanäle (44) um 20 bis 30% größer ist als das entsprechende Querschnittsmaß (d) des zugehörigen Strangs (24).

7. Vorrichtung nach Anspruch 4,
dadurch **gekennzeichnet**, daß die Breite (b) des Spalts zwischen der Trennplatte (50) und der Führungsplatte (54) der Trenneinrichtung (16) 5 bis 20% des Abstandes (a) zwischen aufeinanderfolgenden Trennstellen (26) beträgt.

8. Vorrichtung nach Anspruch 4,
dadurch **gekennzeichnet**, daß der Anschlag (60) für die vorderen Enden der Stränge (24) an einem Schieber (58) ausgebildet ist, der vor dem Einspritzen von Kunststoff in den Formhohlraum (20) aus diesem zurückziehbar ist.

9. Vorrichtung nach Anspruch 8,
dadurch **gekennzeichnet**, daß am Schieber (58) ein Mitnehmer (62) angeordnet ist, der beim Rückzug des Schiebers die am Anschlag (60) anstoßenden Enden der Stränge (24) hakenartig umbiegt.

10. Vorrichtung nach Anspruch 4,
dadurch **gekennzeichnet**, daß der Anschlag (60) für die vorderen Enden der Stränge (24) an einem Formteil (66) ausgebildet ist, das beim Schließen der Spritzform (18) den Strängen (24) entgegen bewegbar ist.

## Claims

1. A method of coating metal parts with plastic material, wherein
- a plurality of strands (24) divisible into individual metal parts (22) and having preformed parting points (26) between the metal parts (22) are advanced into a mold cavity (20) of an injection mold (18),
- one front end section each of the strands (24) is coated with plastics in the mold cavity (20),
- the strands (24) being guided only loosely in a zone in front of the mold cavity (20),
- the strands (24) being advanced up to a stop (60) in the mold cavity (20) and subjected to shearing stress under which they are bent in sinuous fashion to provide a length reserve,
- the frontmost metal part (22) of each strand (24) being fixed in the injection mold (18),
- the shearing stress being relieved following the fixing of the frontmost metal part (22) and the strands (24) being released for their length reserve to creep back, and
- the strands (24) being clamped once more outside of the mold cavity (20) and only then parted at their frontmost parting point (26).

2. The method as claimed in claim 1, characterized in that the frontmost metal parts (22) are coated prior to the cancellation of the shearing force to which the strands (24) are subjected.

3. The method as claimed in claim 1 or 2, characterized in that the strands (24) are broken off to part them at the frontmost parting point (26).

4. An apparatus for coating metal parts with plastic material for carrying out the method according to claim 1, comprising
- a strand magazine (12) to keep ready a plurality of strands (24),
- a feeder means (14) for simultaneously advancing the strands (24) by a certain feed distance,
- guide passages (44) in which each individual strand (24) is guided in a direction away from the feeder means (14),
- a severing means (16) including a receiving plate (46) adjacent the guide passages (44), a severing plate (50) parallel to the same and adjustable transversely of the strands (24), and a guiding plate (54), and
- an injection mold (18) having at least one mold cavity (20) which is located adjacent the severing means (16),
**characterized** in that
- the feeder means (14) is adjustable to a feed distance which is greater than the spacing (a) between two successive parting points (26),
- the guide passages (44) have an inner cross sectional dimension which is great enough to permit the strands (24) to bend in sinuous fashion when subjected to shearing stress,
- a gap is left between the severing plate (50) and the guiding plate (54) of the severing means (16), the gap width (b) being at least as great as the greatest tolerance in spacing which may occur between two successive parting points (26), and
- a stop (60) for the front ends of the strands (24) is disposed in the mold cavity (20) at least part of the time.

5. The apparatus as claimed in claim 4, characterized in that the inner cross sectional dimension (c) of the guide passages (44) is from 10 to 50% greater than the corresponding cross sectional dimension (d) of the respective strand (24).

6. The apparatus as claimed in claim 5, characterized in that the inner cross sectional dimension (c) of the guide passages (44) is from 20 to 30% greater than the corresponding cross sectional dimension (d) of the respective strand (24).

7. The apparatus as claimed in claim 4, characterized in that the width (b) of the gap between the severing plate (50) and the guiding plate (54) of the severing means (16) corresponds to from 5 to 20% of the spacing (a) between successive parting points (26).

8. The apparatus as claimed in claim 4, characterized in that the stop (60) for the front ends of the strands (24) is formed on a slide member (58) adapted to be retracted from the mold cavity (20) prior to the injection of plastics into the same.

9. The apparatus as claimed in claim 8, characterized in that the slide member (58) is formed with a catch (62) which bends into hooks the ends of the strands (24) abutting against the stop (60) when the slide member is retracted.

10. The apparatus as claimed in claim 4, characterized in that the stop (60) for the front ends of the strands (24) is formed at a mold element (66) which is movable to meet the strands (24) upon closing of the injection mold (18).

## Revendications

1. Procédé pour enrober par injection des pièces métalliques avec de la matière plastique, dans lequel :
- plusieurs bandes (24) susceptibles d'être divisées en pièces métalliques individuelles (22), qui présentent des emplacements de séparation préformés (26) entre les pièces métalliques (22), sont avancées dans une cavité de moulage (20) d'un moule d'injection (18),
- un tronçon final avant de chaque bande (24) est enrobé de matière plastique par injection dans la cavité de moulage (20),
- les bandes (24) sont guidées seulement de façon lâche dans un tronçon avant la cavité de moulage (20),
- les bandes (24) sont avancées dans la cavité de moulage (20) jusqu'à une butée (60) et sont chargées par une force d'avance au moyen de laquelle elles sont recourbées en forme de serpentin pour former une réserve de longueur dans le tronçon avant la cavité de moulage (20),
- la pièce métallique située le plus en avant (22) de chaque bande (24) est fixée dans le moule d'injection (18),
- la force d'entraînement est supprimée après la fixation de la pièce métallique avant (22) et les bandes (24) sont libérées pour le relâchement de leur réserve de longueur, et
- les bandes (24) sont à nouveau serrées à l'extérieur de la cavité de moulage (20) et sont détachées uniquement à ce moment là au niveau de leur emplacement de séparation situé le plus en avant (26).

2. Procédé selon la revendication 1, caractérisé en ce que les pièces métalliques situées le plus en avant (22) sont enrobées avant l'annulation de la force d'avance qui charge les bandes (24).

3. Procédé selon l'une ou l'autre des revendications 1 et 2, caractérisé en ce que, en vue de leur séparation, les bandes (24) sont rompues au niveau de l'emplacement de séparation (26) situé le plus en avant.

4. Appareil pour enrober par injection des pièces métalliques avec de la matière plastique, pour la mise en oeuvre du procédé de la revendication 1, comprenant :
- un magasin à bandes (12) pour préparer plusieurs bandes (24),
- un dispositif d'avance (14) pour faire avancer simultanément les bandes (24) sur une course d'avance déterminée,
- des canaux de guidage (44) dans lesquels chaque bande individuelle (24) est déplacée en éloignement du dispositif d'avance (14),
- un dispositif de séparation (16) comprenant une plaque réceptrice (46) qui fait suite aux canaux de guidage (44), une plaque de séparation (50) parallèle à ladite plaque réceptrice et pouvant être déplacée perpendiculairement aux bandes (24), et une plaque de guidage (54), et
- un moule d'injection (18) comprenant au moins une cavité de moule (20) qui fait suite au dispositif de séparation (16),
caractérisé en ce que
- le dispositif d'avance (14) peut être réglé sur une course d'avance qui est supérieure à la distance (a) entre deux emplacements de séparation successifs (26),
- les canaux de guidage (44) ont une dimension en section transversale qui est suffisamment importante pour permettre aux bandes de fléchir en forme de serpentin lorsqu'elles sont sollicitées par une force d'avance,
- une fente est laissée libre entre la plaque de séparation (50) et la plaque de guidage (54) du dispositif de séparation (16), dont la largeur (b) est au moins aussi importante que la tolérance maximum de distance entre des emplacements de séparation successifs (26), et
- une butée (60) est agencée au moins temporairement dans la cavité de moulage (20) pour les extrémités avant des bandes (24).

5. Appareil selon la revendication 4, caractérisé en ce que la dimension en section transversale intérieure (c) des canaux de guidage (44) est supérieure de 10 à 50% à la dimension de section transversale correspondante (d) de la bande associée (24).

6. Appareil selon la revendication 5, caractérisé en ce que la dimension en section transversale intérieure (c) des canaux de guidage (44) est supérieure de 20 à 30% à la dimension de section transversale correspondante (d) de la bande associée (24).

7. Appareil selon la revendication 5, caractérisé en ce que la largeur (b) de la fente entre la plaque de séparation (50) et la plaque de guidage (54) du dispositif de séparation (16) est de 5 à 20% de la distance (a) entre des emplacements de séparation successifs (26).

8. Appareil selon la revendication 4, caractérisé en ce que la butée (60) pour les extrémités avant des bandes (24) est réalisée sur un coulisseau (58) qui est susceptible d'être extrait hors de la cavité de moulage (20) avant l'injection de matière plastique dans celle-ci.

9. Appareil selon la revendication 8, caractérisé en ce qu'un poussoir (62) est agencé sur le coulisseau (68), qui recourbe en forme de crochet les extrémités des bandes (24) en contact contre la butée (60), lors du retrait du coulisseau.

10. Appareil selon la revendication 4, caractérisé en ce que la butée (60) pour les extrémités avant des bandes est réalisée sur une pièce du moule (66) susceptible d'être déplacée à l'encontre des bandes (24) lors de la fermeture du moule d'injection (18).
